(19) Europäisches Patentamt / European Patent Office / Office européen des brevets

(11) **EP 3 973 267 B1**

(12) **EUROPEAN PATENT SPECIFICATION**

(45) Date of publication and mention
of the grant of the patent:
**07.06.2023 Bulletin 2023/23**

(21) Application number: **20719758.3**

(22) Date of filing: **17.04.2020**

(51) International Patent Classification (IPC):
**G01N 19/10** (2006.01)        **G01M 3/04** (2006.01)
**G01N 1/02** (2006.01)

(52) Cooperative Patent Classification (CPC):
**G01N 19/10; G01N 1/02;** G01N 2001/028

(86) International application number:
**PCT/IB2020/053659**

(87) International publication number:
**WO 2020/234661 (26.11.2020 Gazette 2020/48)**

(54) **A HUMIDITY DETECTION EQUIPMENT OF A STRIP**

VORRICHTUNG ZUR FEUCHTIGKEITSERKENNUNG EINES BANDES

ÉQUIPEMENT DE DÉTECTION D'HUMIDITÉ D'UNE BANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.05.2019 PCT/IB2019/054265**

(43) Date of publication of application:
**30.03.2022 Bulletin 2022/13**

(73) Proprietor: **ArcelorMittal**
**1160 Luxembourg (LU)**

(72) Inventors:
• **BANSAL, Akshay**
**57283 Maizières-Lès-Metz (FR)**
• **GRIFFAY, Gérard**
**57530 Coincy (DE)**
• **JANECEK, Vladislav**
**88213 Ravensburg (DE)**

(74) Representative: **Lavoix**
**2, place d'Estienne d'Orves**
**75441 Paris Cedex 09 (FR)**

(56) References cited:
DE-A1- 10 310 311        JP-B2- 4 920 766
US-A- 4 427 976        US-A- 4 701 052
US-A1- 2014 366 608

**Description**

The present invention relates to a method and an equipment permitting to detect the presence of humidity on a surface of a strip, in particular a bare or coated metal strip.

For example, in the metallurgy, the metallic products, such as a washed, rinced or coated metallic strip, might be moist or humid. Humidity in its outer layer is often present after process steps involving liquid, such as water cooling. The presence of humidity might lead to the degradation of the coating on a metallic strip and/or lower the properties of a bare metallic strip, in both cases the product is usually downgraded. In the case of the coated strip, the product degradation can occur during the convey of the strip and can be produced by the transport rolls leaving marks on said coating. Consequently, detecting the presence of humidity on a surface of a metal strip is primordial to ensure a good quality of the product and permits to control some process steps such as the strip drying.

US4427976 A discloses a device for sensing moisture on a metal surface such as a brake path.

The purpose of this invention is to provide a solution permitting to detect the presence of humidity on a surface of a strip, in particular a bare or coated metal strip.

This object is achieved by providing a method according to claim 1. The method can also comprise any characteristics of claims 2 to 7. This object is also achieved by providing an apparatus according to claims 8 to 15.

Other characteristics and advantages of the invention will become apparent from the following detailed description of the invention.

To illustrate the invention, various embodiment and trials of non-limiting example will be described, particularly with reference to the following figures:

Figure 1 exhibits the air flows during the use of an embodiment of the present invention.
Figure 2 exhibits an embodiment of the present invention.
Figure 3 exhibits an embodiment of the present invention.
Figure 4 represents a wiping phenomenon of an impinging air flow.
Figure 5 represents a border deflection phenomenon of an impinging air flow.
Figure 6 represents various streamline contours in function of two process parameters.
Figure 7 represents a gas curtain during the use of an embodiment of the present invention.
Figure 8 exhibits an embodiment of the present invention comprising air guiding means.

The invention relates to a method for detecting the presence of humidity on a surface of a bare metal strip or of a coated metal strip comprising the following steps:

A - blowing on said surface an impinging air flow producing an air flow deflected by said surface, said impinging air flow not being saturated,

B - measuring a humidity content of at least a portion of said deflected air flow,

C - comparing the humidity content of said impinging air flow and said deflected air flow,

D - if said humidity content of said deflected air flow is superior to said humidity content of said impinging air flow, the presence of humidity on said surface of said bare metal strip or of said coated metal strip is detected.

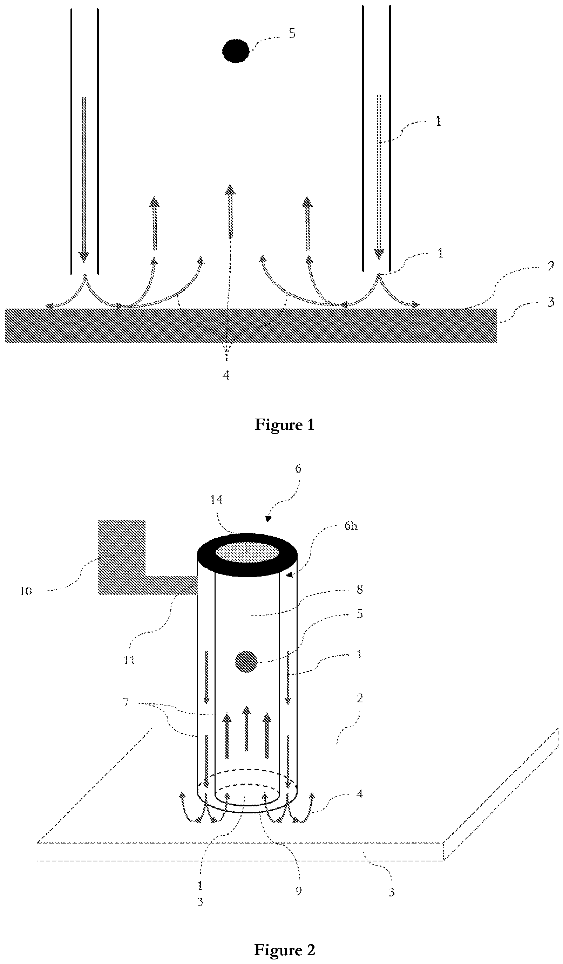

In the first step, as illustrated in Figure 1, an impinging air flow 1 is blown on a surface 2 of a bare or coated metal strip 3 and produces an air flow deflected 4. Said impinging air flow 1 is not saturated so the impinging air flow can absorb more water. When said surface is humid, the impinging air flow 1 reaching the metal strip surface 2 picks up at least a portion of the humidity presents on said surface.

The humidity pick up depends on numerous factors. An impinging air can absorb humidity from said surface only if some humid layer is present on the said surface and if said impinging air is not saturated with humidity. Moreover, smaller is the humidity content of the impinging air, better air can absorb humidity. Without willing to be bound by any theory, apparently, higher is the impinging air temperature, the more it can absorb humidity. Apparently, that is why the skilled in the art could adjust a humidity content and the temperature of the impinging air flow 1 in function of the humidity threshold that is detected/aimed to be detected.

In the second step, the humidity content of at least a portion of said deflected air flow 4 is measured. The measurement is preferably done in a way that the measured humidity content of said deflected air flow 4 is close to the humidity content of said deflected air flow right after it contacted said surface. In other words, the deflected air flow 4should not exchange any humidity content between its deflection from the surface until its humidity content is measured. It is also primordial that only said deflected air flow 4 is measured by the humidity measurement mean 5. If it is not the case, the measurement might be skewed.

In the third step, the humidity content of said impinging air flow 1 is compared to the measured humidity content of said deflected air flow 4.

In the fourth step, the presence or absence of humidity on a surface can be established. If the humidity content of said deflected air flow 4 is higher than of said impinging air flow 1, then humidity is present on the strip surface 2. Only the presence of humidity can be established because this assessment method has a lower threshold. The lower threshold corresponds to the minimum humidity content that can be detected by this method and the equipment associated. As previously explained, it depends on several factors known by the skilled in the art.

Consequently, the invention permits to qualitatively detect the presence of humidity on a surface of a bare or coated metal strip.

Preferably, said impinging air flow 1 has a controlled humidity content of less than 10 000 ppm of water. More preferably, said impinging air flow has a controlled humidity content of less than 8 000 ppm of water. Even more preferably, said impinging air flow has a controlled humidity content of less than 4 000 ppm of water.

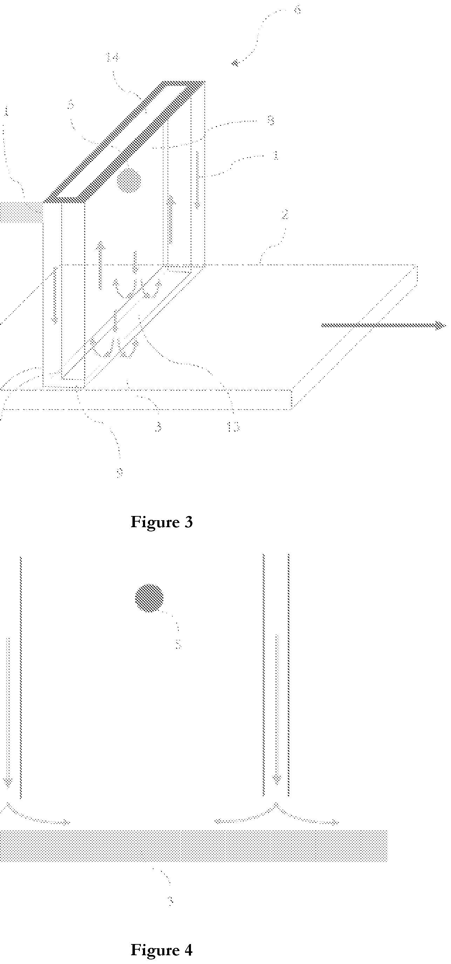

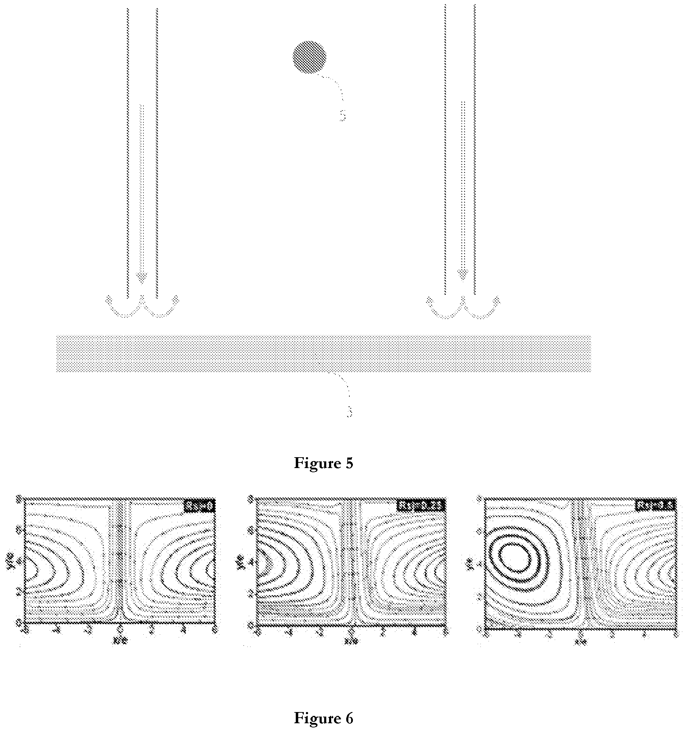

Preferably, said impinging air flow 1 has a speed comprised between 20 and 60 m.s$^{-1}$. Such an air flow speed permits to have an optimal impinging air flow. If the air flow speed is lower than 20 m.s$^{-1}$, the air flow hardly touches the surface, as illustrated in Figure 5. If the air flow speed is higher than 60 m.s$^{-1}$, the impinging air flow 1 can be subject to the wiping phenomenon, i.e. the impinging air flow 1 will be deflected by the tip of its canal, as illustrated in Figure 4. Moreover, if the impinging air glow is too high, the jet does not have enough time to develop under shear from air and hit the strip and create the required fountain effect. Thus, the humidity absorption is more efficient when the air flow speed is comprised between 20 and 60 m.s$^{-1}$. More preferably, said impinging air flow has a speed comprised between 30 and 50 m.s$^{-1}$

Preferably, said bare metal or coated metal 3 is continuously moved at a determined speed and said impinging air flow 1 has a speed of at least two times said metal speed. Such a range permits to increase the humidity absorption of said impinging air flow because it prevents jet sweeping due to the movement of the strip. When the impinging air flow 1 speed is not at least equal to 0.25 time the one of said bare or coated metal, the impinging air flow 1 absorption of the humidity on said surface is not optimal. In Figure 6 are plotted several streamline contours illustrating the impinging air flow on the metallic surface in function of the metallic strip speed, $V_{STRIP}$, and the impinging air flow speed $V_{JET}$. The streamline emerging from the top of the figure and comprised between -0.5 and 0.5 on the "x/e" axe represents the impinging air flow while the metal strip surface is represented along the "y/c" = 0 line. $R_{SJ} = V_{STRIP}/V_{JET}$. It is noticeable that for a $R_{SJ}$ of 0 and 0.25, the impinging air flow contacts the strip surface and without creating turbulence whereas, for a Rsj of 0.5, turbulence starts to appear. Thus, the humidity absorption is more efficient when said impinging air flow has a speed of at least two times said metal speed. For example, the speed of the impinging air flow is of 40 m.s$^{-1}$ and the strip speed is below 20 m.s$^{-1}$.

More preferably, said bare metal or coated metal 3 is continuously moved at a determined speed and said impinging air flow 1 has a speed of at least four times said metal speed.

Preferably, said impinging air flow 1 is produced by an air blowing mean 6, said impinging air flow exits said air blowing means at a speed Vi and said air blowing mean is positioned at a distance D from said metal strip such that: $1.10^{-4}$ s$^{-1}$ < D/Vi < $5.10^{-3}$ s$^{-1}$. Apparently, higher is the distance at which said air blowing mean is positioned from said metal strip, higher should be the impinging air flow speed in order to ensure the air deflection. For example, the impinging air flow speed can be of 50 m.s$^{-1}$ and the distance D is of 20 mm. Of course, the minimum distance at which the air blowing means is limited by the strip vibration, i.e. the strip should not contact the air blowing means.

Preferably, said impinging air flow 1 is produced by an air blowing mean, said blowing mean is moved across the strip width. It permits to detect default across the strip width. Moreover, several air blowing mean can be used to detect the presence of humidity at several spots across the strip width and length.

The invention also relates to an equipment for detecting the presence of humidity on a surface of a metal strip 3 or of a coated metal strip 3 comprising:

- a hollow body 6h comprising a double wall 7 and a central portion 8 and said double wall and central part comprising at least one opening 9 facing said surface 2 of a metal strip or of a coated metal strip 3,
- at least a mean to blow a gas into the double wall 7 and configured so that said blown gas exits said double wall 7 by said at least one opening facing said surface 9,
- at least the humidity measuring mean 5 encompassed by said hollow body 6h and outside of said double wall 7,
- said at least one opening facing 9 said surface 2 of a metal strip or of a coated metal strip 3 is configured to create a continuous blown gas curtain 12 between said hollow body 6h and said surface 2 of a metal strip or of a coated metal strip 3 and to deflect at least a portion of said blown gas onto the surface of a metal strip or of a coated metal strip towards at least one of said absolute humidity measuring mean 5.

As illustrated in Figures 2 and 3, said equipment comprises a double wall 7 wherein a gas can freely flow around said central portion 8. A gas is blown into the double wall 7 by a blowing gas mean 10 and exits said double wall 7 by at least one opening facing the metal strip surface 9. As the invention aims to blow a gas onto said surface 9, the entry 11 of the blown gas into the double wall 7 is preferably configured such that the exit of the gas through the opening 9 is eased. In other words, from the blown gas entrance into the double wall until its exit, the blowing gas should always flow towards said opening 9. This principle aims at reducing turbulence in the double wall and thus having a more uniform flow profile at the slot exit. Preferably, the blown gas has a pressure above the atmospheric pressure leading to a natural exit through the opening 9. The function of the central part 8 of the hollow body 6 is to isolate the humidity content measuring device from the ambient air so that it only measures the humidity content of the deflected air flow 4 towards the measuring mean 5.

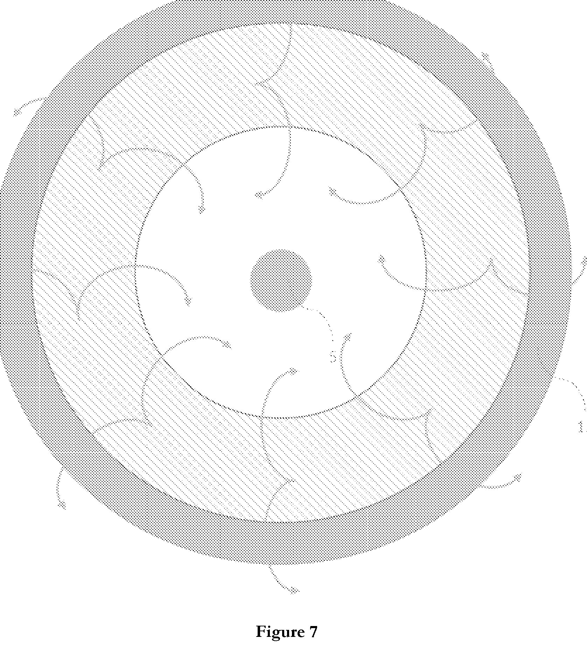

As illustrated in Figure 7, said at least one opening is configured to create a continuous gas curtain 12 between said hollow body 6 and said surface 2. This gas curtain is made by the blown gas. Only a portion of the deflected gas enters the central part 8 of the hollow body 6 for two reasons. Firstly, such a continuous gas curtain prevents the ambient air to enter said central part 8 from its surface side. The gas is preventing from entering by the other side 14 of the central part 8 due to the pressure difference between the deflected gas 4 and the atmospheric pressure. Because the deflected gas has a higher pressure, it is naturally dragged through the central part 8 from the strip surface side to the other side. Thus, non-deflected air is prevented from entering in said central part 8.

As illustrated in Figures 2 and 3, said central part 8 comprises at least a humidity content measuring mean 5. Thanks to the previously explained phenomenon, only the humidity content of the deflected air 4 is measured by said measuring mean 5 because only the deflected air comes into contact with the humidity content measuring mean 5.

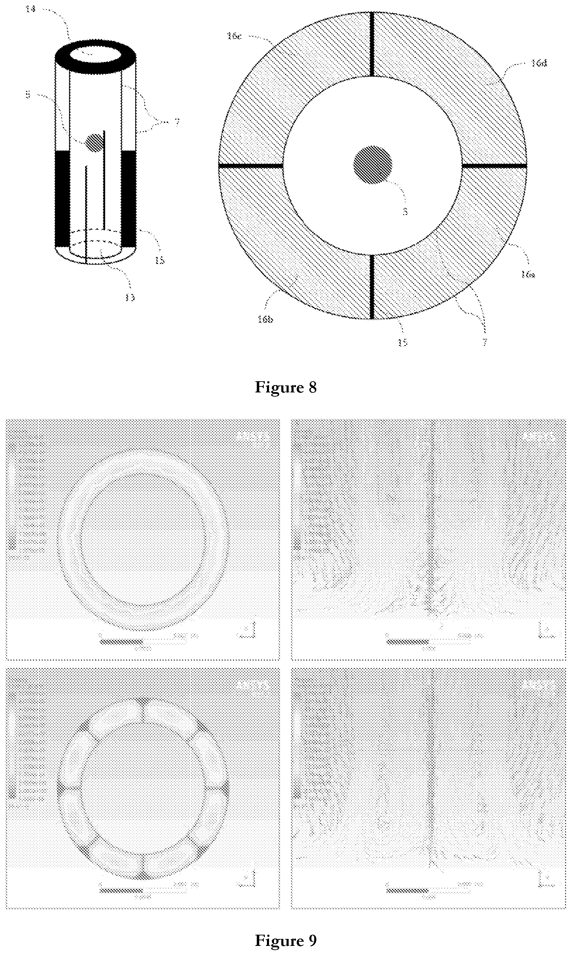

Preferably, as illustrated in Figure 8, said equipment comprises one opening facing said surface of a metal strip or of a coated metal strip, said opening being segmented into two to twenty parts.

Preferably, said equipment comprises one opening 9 facing said surface of a metal strip or of a coated metal strip, said opening 9 being segmented (16a, 16b, 16c, 16d) into four to ten compartments.

Preferably, said double wall 7 comprises gas guiding means 15 configured to guide said blown gas perpendicularly to said surface of a metal strip or of a coated metal strip from inside said hollow body 6h to said at least four to ten compartments (16a, 16b, 16c, 16d). As illustrated in Figure 8, guiding means 15 such as fins are placed inside the double wall 7. They extend from said one opening 9 facing said surface 2 to somewhere in the double wall. Preferably, said guiding means extend preferentially from said compartmented opening to half the height of the double wall creating compartments (16a, 16b, 16c and 16d), as represented in Figure 7. They aim to create an exiting impinging flow perpendicular to the surface 2 by reducing and/or suppressing any radial component of the blown flow 1. The longer is the gas guiding means, the more is the impinging air flow speed decreased due to head loss. Gas guiding means 15 are used to increase the proportion of reflected gas flow and the effectiveness of the gas curtain 12. Figure 8 exhibits two numerical modellings of the velocity vectors of the impinging gas 1 after they exit one opening 9 facing said surface 2. In the first case, no fins have been placed while in the second case, 8 fins have been placed. It can be observed in the second case that a greater portion of the impinging flow has been deflected inside said central part 8 which improves the humidity content measurement because it increases the humidity content absorbed and flown inside said central part 8.

Preferably, said hollow body 6h is made of a material having a rugosity smaller than 2 mm. Without willing to be bound by any theory, if the rugosity is higher than 2 mm, the impinging jet is deflected sidewise reducing the portion of the deflected air on said surface 2 as illustrated in Figure 2. More preferably, said hollow body is made of a material having a rugosity smaller than 1 mm. Even more preferably, said hollow body is made of a material having a rugosity smaller than 500 $\mu$m.

Preferably, said hollow body 6h is made of a water-repellent material. Such a material permits to reduce the humidity absorption by the hollow body which improves the reliability of the measured humidity content of the deflected gas 4 because a smaller humidity content is transferred from the deflected gas 4 to the hollow body 6 or vice-versa.

Preferably, said equipment comprises means to convey said metal strip 3. Conveying the metal strip enables to have several measurement points of the humidity content along the strip. The strip convey can be achieved through rolls.

Preferably, said hollow body is a hollow cylinder having an inner radius, an outer radius and a length. As illustrated in Figure 6, using a hollow cylinder is advantageous because the curtain is more efficient because it is homogeneous around said central part 8. Moreover, the air circulation inside the hollow body is improved because there is no edge.

Preferably, said hollow cylinder length is perpendicular to said strip surface. It is advantageous because the curtain is more efficient because it is homogeneous around said central part 8.

**Claims**

1. A method for detecting the presence of humidity on a surface (2) of a bare metal strip (3) or of a coated metal strip (3), the method being **characterized in that** it comprises the following steps:

   - blowing on said surface an impinging air flow (1) producing an air flow deflected (4) by said surface (3), said impinging air flow (1) not being saturated,
   - measuring a humidity content of at least a portion of said deflected air flow (4),
   - comparing the humidity content of said impinging air flow (1) and said deflected air flow (4).

- if said humidity content of said deflected air flow (4) is superior to said humidity content of said impinging air flow (1), the presence of humidity on said surface of said bare metal strip (3) or of said coated metal strip (3) is detected.

2. The method according to claim 1, wherein said impinging air flow (1) has a controlled humidity content of less than 10 000 ppm of water.

3. The method according to claims 1 or 2, wherein said impinging air flow (1) has a speed comprised between 20 and 60 m.s$^{-1}$.

4. The method according to any one of claims 1 to 3, wherein said metal or coated metal (3) is continuously moved at a determined speed and said impinging air flow (1) has a speed at least two times said metal speed.

5. The method according to any one of claims 1 to 4, wherein said metal or coated metal (3) is continuously moved at a determined speed and said impinging air flow (1) has a speed at least four times said metal speed.

6. The method according to any one of claims 1 to 5, wherein said impinging air flow (1) is produced by an air blowing mean (6), said impinging air flow exits said air blowing means (6) at a speed Vi and said air blowing mean is positioned at a distance D from said metal strip such that:

$$1.10^{-4}\ \mathrm{s}^{-1} < D/Vi < 5.10^{-3}\ \mathrm{s}^{-1}.$$

7. The method according to any one of claims 1 to 6, wherein said impinging air flow (1) is produced by an air blowing mean, said blowing mean is moved across the strip width.

8. An equipment for detecting the presence of humidity on a surface of a metal strip (3) or of a coated metal strip (3), the equipment being **characterized in that** it comprises:

   - a hollow body (6h) comprising a double wall (7) and a central portion (8) and said double wall and central part comprising at least one opening (9) facing said surface (2) of a metal strip or of a coated metal strip (3),
   - at least a mean to blow a gas into the double wall (7) and configured so that said blown gas exits said double wall (7) by said at least one opening facing said surface (9),
   - at least the humidity measuring mean (5) encompassed by said hollow body (6h) and outside of said double wall (7),

   - said at least one opening facing (9) said surface (2) of a metal strip or of a coated metal strip (3) is configured to create a continuous blown gas curtain (12) between said hollow body (6h) and said surface (2) of a metal strip or of a coated metal strip (3) and to deflect at least a portion of said blown gas onto the surface of a metal strip or of a coated metal strip towards at least one of said absolute humidity measuring mean (5).

9. The equipment according to claim 8, wherein said equipment comprises one opening (9) facing said surface of a metal strip or of a coated metal strip, said opening (9) being segmented into four to ten compartments (16a, 16b, 16c, 16d).

10. The equipment according to claim 8 or 9, wherein said double wall (7) comprises gas guiding means (15) configured to guide said blown gas perpendicularly to said surface of a metal strip or of a coated metal strip from inside said hollow body (6h) to said at least four to ten compartments (16a, 16b, 16c, 16d).

11. The equipment according to any one of claims 8 to 10, wherein said hollow body (6h) is made of a material having a rugosity smaller than 2 mm.

12. The equipment according to any one of claims 8 to 11, wherein said hollow body (6h) is made of a water-repellent material.

13. The equipment according to any one of claims 8 to 12, wherein said equipment comprises means to convey said metal strip.

14. The equipment according to any one of claims 8 to 13, wherein said hollow body is a hollow cylinder having an inner radius, an outer radius and a length.

15. The equipment according to any one of claims 8 to 14, wherein said hollow cylinder length is perpendicular to said strip surface.

**Patentansprüche**

1. Verfahren zum Erfassen des Vorhandenseins von Feuchtigkeit auf einer Oberfläche (2) eines blanken Metallbands (3) oder eines beschichteten Metallbands (3), **dadurch gekennzeichnet, dass** es die folgenden Schritte umfasst:

   - Blasen eines auftreffenden Luftstroms (1) auf die Oberfläche, was einen von der Oberfläche (3) abgelenkten Luftstrom (4) erzeugt, wobei der auftreffende Luftstrom (1) nicht gesättigt ist,
   - Messen des Feuchtigkeitsgehalts von mindestens einem Anteil des abgelenkten Luftstroms (4),

- Vergleichen des Feuchtigkeitsgehalts des auftreffenden Luftstroms (1) und des abgelenkten Luftstroms (4)

- wenn der Feuchtigkeitsgehalt des abgelenkten Luftstroms (4) höher ist als der Feuchtigkeitsgehalt des auftreffenden Luftstroms (1), wird das Vorhandensein von Feuchtigkeit auf der Oberfläche des blanken Metallbands (3) oder des beschichteten Metallbands (3) erfasst.

2. Verfahren nach Anspruch 1, wobei der auftreffende Luftstrom (1) einen kontrollierten Feuchtigkeitsgehalt von weniger als 10.000 ppm Wasser aufweist.

3. Verfahren nach Anspruch 1 oder 2, wobei der auftreffende Luftstrom (1) eine Geschwindigkeit zwischen 20 und 60 m.s$^{-1}$ aufweist.

4. Verfahren nach einem der Ansprüche 1 bis 3, wobei das Metall oder das beschichtete Metall (3) kontinuierlich mit einer bestimmten Geschwindigkeit bewegt wird und der auftreffende Luftstrom (1) eine Geschwindigkeit von mindestens dem Zweifachen der Metallgeschwindigkeit aufweist.

5. Verfahren nach einem der Ansprüche 1 bis 4, wobei das Metall oder das beschichtete Metall (3) kontinuierlich mit einer bestimmten Geschwindigkeit bewegt wird und der auftreffende Luftstrom (1) eine Geschwindigkeit von mindestens dem Vierfachen der Metallgeschwindigkeit aufweist.

6. Verfahren nach einem der Ansprüche 1 bis 5, wobei der auftreffende Luftstrom (1) durch eine Luftblaseinrichtung (6) erzeugt wird, der auftreffende Luftstrom mit einer Geschwindigkeit Vi aus der Luftblaseinrichtung (6) austritt und die Luftblaseinrichtung in einem Abstand D von dem Metallband positioniert ist, sodass:

$$1.10^{-4} \text{ s}^{-1} < D/Vi < 5.10^{-3} \text{ s}^{-1}.$$

7. Verfahren nach einem der Ansprüche 1 bis 6, wobei der auftreffende Luftstrom (1) durch eine Luftblaseinrichtung erzeugt wird, die Luftblaseinrichtung über die Bandbreite bewegt wird.

8. Ausrüstung zum Erfassen des Vorhandenseins von Feuchtigkeit auf einer Oberfläche eines Metallbands (3) oder eines beschichteten Metallbands (3), **dadurch gekennzeichnet, dass** sie Folgendes umfasst:

- einen Hohlkörper (6h), umfassend eine Doppelwand (7) und einen mittleren Abschnitt (8), wobei die Doppelwand und der mittlere Abschnitt mindestens eine Öffnung (9) umfassen, die der Oberfläche (2) eines Metallbands oder eines beschichteten Metallbands (3) zugewandt ist,

- mindestens eine Einrichtung zum Einblasen eines Gases in die Doppelwand (7) und die konfiguriert ist, sodass das eingeblasene Gas durch die mindestens eine Öffnung, die der Oberfläche (9) zugewandt ist, aus der Doppelwand (7) austritt,

- mindestens die Feuchtigkeitsmesseinrichtung (5), die von dem Hohlkörper (6h) umschlossen und außerhalb der Doppelwand (7) ist,

- wobei die mindestens eine Öffnung (9), die der Oberfläche (2) eines Metallbands oder eines beschichteten Metallbands (3) zugewandt ist, konfiguriert ist, um einen kontinuierlichen geblasenen Gasvorhang (12) zwischen dem Hohlkörper (6h) und der Oberfläche (2) eines Metallbands oder eines beschichteten Metallbands (3) zu erzeugen, und um mindestens einen Anteil des auf die Oberfläche eines Metallbands oder eines beschichteten Metallbands geblasenen Gases in Richtung mindestens einer der Messeinrichtungen absoluter Feuchtigkeit (5) abzulenken.

9. Ausrüstung nach Anspruch 8, wobei die Ausrüstung eine Öffnung (9) aufweist, die der Oberfläche eines Metallbands oder eines beschichteten Metallbands zugewandt ist, wobei die Öffnung (9) in vier bis zehn Kammern (16a, 16b, 16c, 16d) segmentiert ist.

10. Vorrichtung nach Anspruch 8 oder 9, wobei die Doppelwand (7) Gasleiteinrichtungen (15) umfasst, die konfiguriert sind, um das eingeblasene Gas senkrecht zu der Oberfläche eines Metallbands oder eines beschichteten Metallbands vom Inneren des Hohlkörpers (6h) zu den mindestens vier bis zehn Kammern (16a, 16b, 16c, 16d) zu leiten.

11. Ausrüstung nach einem der Ansprüche 8 bis 10, wobei der Hohlkörper (6h) aus einem Material gefertigt ist, das eine Rauhigkeit von weniger als 2 mm aufweist.

12. Ausrüstung nach einem der Ansprüche 8 bis 11, wobei der Hohlkörper (6h) aus einem wasserabstoßenden Material gefertigt ist.

13. Ausrüstung nach einem der Ansprüche 8 bis 12, wobei die Ausrüstung Einrichtungen zum Fördern des Metallbands umfasst.

14. Ausrüstung nach einem der Ansprüche 8 bis 13, wobei der Hohlkörper ein Hohlzylinder ist, der einen Innenradius, einen Außenradius und eine Länge aufweist.

15. Ausrüstung nach einem der Ansprüche 8 bis 14, wobei der Hohlzylinder senkrecht zu der Bandoberfläche ist.

**Revendications**

1. Procédé de détection de la présence d'humidité sur une surface (2) d'une bande métallique nue (3) ou d'une bande métallique revêtue (3), le procédé étant **caractérisé en ce qu'**il comprend les étapes suivantes :

     - souffler sur ladite surface un flux d'air incident (1) produisant un flux d'air dévié (4) par ladite surface (3), ledit flux d'air incident (1) n'étant pas saturé,
     - mesurer une teneur en humidité d'au moins une partie dudit flux d'air dévié (4),
     - comparer la teneur en humidité dudit flux d'air incident (1) et dudit flux d'air dévié (4),
     - si ladite teneur en humidité dudit flux d'air dévié (4) est supérieure à ladite teneur en humidité dudit flux d'air incident (1), la présence d'humidité sur ladite surface de ladite bande métallique nue (3) ou de ladite bande métallique revêtue (3) est détectée.

2. Procédé selon la revendication 1, dans lequel ledit flux d'air incident (1) a une teneur en humidité contrôlée inférieure à 10 000 ppm d'eau.

3. Procédé selon les revendications 1 ou 2, dans lequel ledit flux d'air incident (1) a une vitesse comprise entre 20 et 60 m.s$^{-1}$.

4. Procédé selon l'une quelconque des revendications 1 à 3, dans lequel ledit métal ou métal revêtu (3) est déplacé en continu à une vitesse déterminée et ledit flux d'air incident (1) a une vitesse au moins deux fois supérieure à ladite vitesse du métal.

5. Procédé selon l'une quelconque des revendications 1 à 4, dans lequel ledit métal ou métal revêtu (3) est déplacé en continu à une vitesse déterminée et ledit flux d'air incident (1) a une vitesse au moins quatre fois supérieure à ladite vitesse du métal.

6. Procédé selon l'une quelconque des revendications 1 à 5, dans lequel ledit flux d'air incident (1) est produit par un moyen de soufflage d'air (6), ledit flux d'air incident sort dudit moyen de soufflage d'air (6) à une vitesse Vi et ledit moyen de soufflage d'air est positionné à une distance D de ladite bande métallique de telle sorte que :

$$1.10^{-4} \text{ s}^{-1} < D/Vi < 5.10^{-3} \text{ s}^{-1}.$$

7. Procédé selon l'une quelconque des revendications 1 à 6, dans lequel ledit flux d'air incident (1) est produit par un moyen de soufflage d'air, ledit moyen de soufflage est déplacé sur la largeur de la bande.

8. Équipement de détection de la présence d'humidité sur une surface d'une bande métallique (3) ou d'une bande métallique revêtue (3), l'équipement étant **caractérisé en ce qu'**il comprend :

     - un corps creux (6h) comprenant une double paroi (7) et une partie centrale (8) et lesdites double paroi et partie centrale comprenant au moins une ouverture (9) faisant face à ladite surface (2) d'une bande métallique ou d'une bande métallique revêtue (3),
     - au moins un moyen destiné à souffler un gaz dans la double paroi (7) et configuré de sorte que ledit gaz soufflé sorte de ladite double paroi (7) par ladite au moins une ouverture faisant face à ladite surface (9),
     - au moins le moyen de mesure de l'humidité (5) entouré par ledit corps creux (6h) et à l'extérieur de ladite double paroi (7),
     - ladite au moins une ouverture (9) faisant face à ladite surface (2) d'une bande métallique ou d'une bande métallique revêtue (3) est configurée pour créer un rideau de gaz soufflé continu (12) entre ledit corps creux (6h) et ladite surface (2) d'une bande métallique ou d'une bande métallique revêtue (3) et pour dévier au moins une partie dudit gaz soufflé sur la surface d'une bande métallique ou d'une bande métallique revêtue (3) vers au moins un desdits moyens de mesure d'humidité absolue (5).

9. Équipement selon la revendication 8, dans lequel ledit équipement comprend une ouverture (9) faisant face à ladite surface d'une bande métallique ou d'une bande métallique revêtue, ladite ouverture (9) étant segmentée en quatre à dix compartiments (16a, 16b, 16c, 16d).

10. Équipement selon la revendication 8 ou 9, dans lequel ladite double paroi (7) comprend des moyens de guidage de gaz (15) configurés pour guider ledit gaz soufflé perpendiculairement à ladite surface d'une bande métallique ou d'une bande métallique revêtue depuis l'intérieur dudit corps creux (6h) vers lesdits au moins quatre à dix compartiments (16a, 16b, 16c, 16d).

11. Équipement selon l'une quelconque des revendications 8 à 10, dans lequel ledit corps creux (6h) est constitué d'un matériau ayant une rugosité inférieure à 2 mm.

12. Équipement selon l'une quelconque des revendications 8 à 11, dans lequel chaque corps creux (6h) est constitué d'un matériau hydrofuge.

13. Équipement selon l'une quelconque des revendications 8 à 12, dans lequel ledit équipement comprend un moyen destiné à transporter ladite bande métallique.

14. Équipement selon l'une quelconque des revendications 8 à 13, dans lequel ledit corps creux est un cylindre creux ayant un rayon intérieur, un rayon extérieur et une longueur.

15. Équipement selon l'une quelconque des revendications 8 à 14, dans lequel ladite longueur de cylindre creux est perpendiculaire à la surface de ladite bande.

**Figure 1**

**Figure 2**

**Figure 3**

**Figure 4**

Figure 5

Figure 6

Figure 7

**Figure 8**

**Figure 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4427976 A